# FASCICULE DE BREVET EUROPEEN

(11) **EP 0 915 791 B1**
(45) Date de publication et mention de la délivrance du brevet: **12.12.2001**
(21) Numéro de dépôt: 97927231.7
(22) Date de dépôt: 04.06.1997
(51) Int. Cl.: B60T 13/565, B60T 13/575

(54) **DISPOSITIF DE FREINAGE ASSISTE A REACTION HYDRAULIQUE ET SECURITE ACCRUE**
BREMSKRAFTVERSTÄRKER MIT HYDRAULISCHER REAKTION UND MIT GRÖSSERER SICHERHEIT
POWER BRAKING DEVICE WITH HYDRAULIC REACTION AND INCREASED SAFETY

(30) Priorité: 09.08.1996 FR 9610188
(43) Date de publication de la demande: 19.05.1999
(73) Titulaire: BOSCH SISTEMAS DE FRENADO, S.L., 08080 Barcelona 6 (ES)
(72) Inventeur: SIMON BACARDIT, Juan, F-93700 Drancy (FR)
(74) Mandataire: Bentz, Jean-Paul
(86) Numéro de dépôt international: FR9700986
(87) Numéro de publication internationale: WO9806613

(56) Documents cités:
- WO-A-96/07572
- FR-A- 1 475 049
- FR-A- 2 658 466

## Description

La présente invention concerne les dispositifs de freinage assisté pour véhicules à moteur, comprenant un maître-cylindre commandant la pression hydraulique dans le circuit de freinage relié aux freins du véhicule, ce maître-cylindre étant susceptible d'être actionné par un servomoteur pneumatique d'assistance lorsque le conducteur du véhicule appuie sur la pédale de freinage.

De façon classique, le maître-cylindre est rempli d'un fluide de freinage et équipé d'un piston primaire destiné à recevoir une force d'actionnement se composant d'une force d'entrée et d'une force d'assistance agissant toutes deux suivant une direction axiale pour engendrer une augmentation de pression dans un circuit hydraulique primaire, et d'un piston hydraulique secondaire soumis à la pression hydraulique dans le circuit hydraulique primaire et engendrant une augmentation de pression dans un circuit hydraulique secondaire.

D'autre part, de façon classique, le servomoteur pneumatique d'assistance est susceptible d'être commandé par application de la force d'entrée sur une tige de commande contrôlant l'ouverture d'un clapet, pour exercer la force d'actionnement sur le piston primaire du maître-cylindre, le servomoteur comportant une enveloppe rigide séparée de façon étanche en deux chambres au moyen d'une cloison mobile susceptible d'être sollicitée par une différence de pression entre les deux chambres résultant de l'ouverture du clapet et d'entraîner un piston pneumatique mobile par rapport à l'enveloppe et portant le clapet, la force d'entrée étant transmise par l'intermédiaire d'un disque de réaction sur lequel s'appuie également le piston pneumatique pour lui fournir une partie au moins de la force d'assistance.

Un dispositif de ce type est bien connu dans l'art antérieur et se trouve par exemple décrit dans le document US-A-4 491 058.

On a développé parallèlement des dispositifs de freinage assisté dans lesquels la réaction s'exerçant sur la tige de commande n'est plus fournie mécaniquement par un disque de réaction, mais par la pression hydraulique régnant dans le maître-cylindre.

Dans ces dispositifs, le piston hydraulique principal du maître cylindre comporte lui-même un cylindre mobile creux, communiquant avec le maître-cylindre, recevant une partie au moins de la force d'assistance, et à l'intérieur duquel coulisse, de façon étanche et suivant la direction axiale, un piston hydraulique secondaire susceptible de recevoir au moins la force d'entrée, des moyens élastiques exerçant une force élastique entre le piston hydraulique secondaire et le cylindre mobile et sollicitant le piston hydraulique secondaire en direction du maître-cylindre, au moins une ouverture étant pratiquée dans le cylindre mobile pour faire communiquer l'intérieur de ce dernier avec l'intérieur du maître-cylindre.

Un tel dispositif se trouve par exemple décrit dans le document FR-A-2 658 466.

Ces dispositifs à réaction hydraulique présentent comme avantage principal que, quelles que soient l'intensité de l'action de freinage ou la vitesse d'application de la force d'entrée, leur courbe caractéristique de fonctionnement, à savoir la courbe donnant la pression dans le maître-cylindre en fonction de l'intensité de la force à l'entrée du servomoteur, est inchangée.

Cependant, en cas de défaillance dans le circuit hydraulique entre le maître-cylindre et les freins de roues, la pression à l'intérieur du circuit hydraulique primaire ou secondaire ne peut s'établir. Il en résulte dans les deux cas une augmentation de la course de la pédale de frein pour obtenir une augmentation de la pression hydraulique dans le circuit intact. Cependant, si cette défaillance affecte le circuit hydraulique primaire, il en résulte de plus une perte totale de la réaction ressentie par le conducteur sur la pédale de frein, qui ne peut plus alors doser l'effort de freinage qu'en dosant la course de la pédale de frein, elle même déjà perturbée.

On a déjà tenté de résoudre ce problème, par exemple dans les documents FR-A-1 475 049 ou US-A-3 470 695. Ces documents prévoient d'utiliser la pression hydraulique du circuit secondaire, intact par hypothèse, pour fournir la réaction souhaitée sur la pédale de frein. Outre le fait qu'ils aboutissent à des réalisations complexes, ils impliquent la présence d'un troisième piston coulissant de façon étanche dans le piston secondaire. Une telle disposition est prohibée par la réglementation actuelle, car elle introduit un risque de fuite entre les circuits primaire et secondaire, qui n'est pas détectable dans les conditions normales de fonctionnement, c'est à dire hors défaillance, conditions qui sont le plus souvent remplies. De plus, les systèmes de freinage assisté de ces documents ne présentent pas de caractéristique de « saut » au début d'une action de freinage, caractéristique maintenant requise par les constructeurs automobiles pour améliorer la sensation ressentie par le conducteur lorsqu'il actionne le dispositif de freinage.

La présente invention se place dans ce contexte et a pour objet de proposer un dispositif de freinage assisté à réaction hydraulique, qui fasse ressentir au conducteur dans tous les cas de fonctionnement une réaction sur la pédale de frein, même en cas de défaillance du circuit hydraulique primaire, sans nécessiter de dispositif complexe, et qui soit donc d'un coût réduit, tout en ayant un fonctionnement fiable en toutes circonstances, l'étanchéité entre les circuits primaire et secondaire étant conforme à la réglementation.

Dans ce but, la présente invention propose un dispositif de freinage assisté pour véhicule à moteur, comprenant d'une part un maître-cylindre rempli d'un fluide de freinage et équipé d'un piston primaire destiné à recevoir une force d'actionnement se composant d'une force d'entrée et d'une force d'assistance agissant toutes deux suivant une direction axiale, pour engendrer une augmentation de pression dans un circuit hydraulique primaire, et d'un piston hydraulique secondaire soumis à la pression hydraulique dans le circuit hydraulique primaire et engendrant une augmentation de pression dans un circuit hydraulique secondaire, et d'autre part un servomoteur pneumatique d'assistance susceptible d'être commandé par application de la force d'entrée sur une tige de commande solidaire d'un plongeur contrôlant l'ouverture d'un clapet à trois voies, pour exercer la force d'actionnement sur le piston primaire, le servomoteur comportant une enveloppe rigide séparée de façon étanche en au moins deux chambres au moyen d'au moins une cloison mobile, susceptible d'être sollicitée par une différence de pression entre les deux chambres résultant de l'ouverture du clapet à trois voies et d'entraîner un piston pneumatique, mobile par rapport à l'enveloppe, portant le clapet à trois voies et contribuant au moins à transmettre la force d'assistance, le piston primaire du maître cylindre comportant lui-même un cylindre mobile, creux, communiquant avec le circuit hydraulique primaire du maître-cylindre, recevant une partie au moins de la force d'assistance, et à l'intérieur duquel coulisse, de façon étanche et suivant la direction axiale, un piston de réaction susceptible de recevoir au moins la force d'entrée, des premiers moyens élastiques exerçant une première force élastique entre le piston de réaction et le cylindre mobile et sollicitant le piston de réaction en direction du maître-cylindre, au moins une ouverture étant pratiquée dans le cylindre mobile pour faire communiquer l'intérieur de ce dernier avec le circuit hydraulique primaire.

Un tel dispositif de freinage assisté est par exemple connu du document EP-B-0 662 894.

Selon la présente invention, le cylindre mobile comporte une pièce de réaction sur laquelle est susceptible de venir en butée une partie d'extrémité du piston de réaction pour recevoir de cette pièce de réaction une force proportionnelle à la force engendrée par la pression hydraulique du circuit hydraulique secondaire s'exerçant sur le piston secondaire lors d'une défaillance du circuit hydraulique primaire, la force engendrée par la pression hydraulique lors d'une défaillance du circuit hydraulique primaire étant mécaniquement transmise à la pièce de réaction par le piston secondaire.

D'autres buts, caractéristiques et avantages de l'invention ressortiront clairement de la description qui suit d'un mode de réalisation donné à titre d'exemple nullement limitatif, en référence aux dessins annexés sur lesquels :
- La Figure 1 représente une vue en coupe d'un dispositif de freinage assisté réalisé conformément à la présente invention, et
- La Figure 2 représente une vue en coupe a plus grande échelle de la partie centrale du dispositif de la Figure 1;

Dans la mesure où l'invention ne concerne qu'un perfectionnement apporté aux systèmes de freinage à assistance pneumatique, et où la constitution générale et le fonctionnement de ces derniers sont bien connus de l'homme de l'art, ces systèmes ne seront rapidement rappelés ici que pour permettre une compréhension totale du perfectionnement que représente l'invention.

Schématiquement, un système de ce type comprend un servomoteur 100 et un maître-cylindre 200.

Le servomoteur 100 est prévu pour être fixé de façon habituelle sur un tablier (non représenté) de séparation entre un compartiment moteur d'un véhicule et l'habitacle de ce véhicule et pour être actionné par une pédale de freinage (non représentée) située dans cet habitacle. Le maître-cylindre 200 commandant le circuit de freinage hydraulique du véhicule est fixé sur la paroi avant du servomoteur 100.

Par convention, on appelle "avant" de l'ensemble servomoteur/maître-cylindre la partie de ce dernier tournée vers le maître-cylindre 200 et "arrière" de cet ensemble la partie tournée vers la pédale de frein 12. Sur les Figures, l'avant est ainsi à gauche et l'arrière à droite.

Le servomoteur 100 comprend lui-même une enveloppe rigide 10 dont le volume intérieur est séparé en une chambre avant 12 et une chambre arrière 14, de façon étanche, par une cloison mobile 16 comprenant une membrane 18 et une jupe rigide 20 et susceptible d'entraîner un piston pneumatique 22 mobile à l'intérieur de l'enveloppe 10.

La chambre avant 12, dont la face avant est fermée de façon étanche par le maître-cylindre 200, est en permanence raccordée à une source de dépression (non représentée) à travers un raccord 15. La pression dans la chambre arrière 14 est contrôlée par une valve à trois voies 24, commandée par une tige de commande 26 reliée à la pédale de frein et solidaire d'un plongeur 28.

Lorsque la tige de commande 26 est en position de repos, c'est à dire tirée vers la droite, le clapet 24 établit une communication entre les deux chambres 12 et 14 du servomoteur. La chambre arrière 14 étant alors soumise à la même dépression que la chambre avant 12, le piston 22 est repoussé vers la droite, en position de repos, par un ressort 25.

L'actionnement de la tige de commande 26 vers la gauche a pour effet, dans un premier temps, de déplacer le clapet 24 de façon qu'il isole l'une de l'autre les chambres 12 et 14 puis, dans un deuxième temps, de déplacer ce clapet de façon qu'il ouvre la chambre arrière 14 à la pression atmosphérique.

La différence de pression entre les deux chambres 12 et 14 alors ressentie par la membrane 18 exerce sur la cloison mobile 16 une poussée qui tend à la déplacer vers la gauche et à lui permettre d'entraîner le piston 22 qui se déplace à son tour en comprimant le ressort 25.

L'effort de freinage exercé sur la tige de commande 26, ou "force d'entrée" et l'effort d'assistance au freinage, ou "force d'assistance", résultant de la poussée de la cloison mobile 16, sont alors appliqués ensemble suivant l'axe X-X' du servomoteur 100 en direction du maître-cylindre 200, et se conjuguent pour constituer la force d'actionnement de ce dernier.

De façon plus précise, la force d'actionnement est appliquée sur le piston primaire 30 du maître-cylindre et en provoque le déplacement vers la gauche (sur les Figures) , ce qui entraîne une élévation de pression du liquide de freinage présent dans le circuit primaire I du maître-cylindre 200, et un actionnement du frein (non représenté) relié à ce dernier. La pression dans le circuit primaire I sollicite à son tour le piston secondaire 3 du maître-cylindre vers la gauche, ce qui entraîne une élévation de pression du liquide de freinage présent dans le circuit secondaire II du maître-cylindre et un actionnement du frein relié à ce dernier.

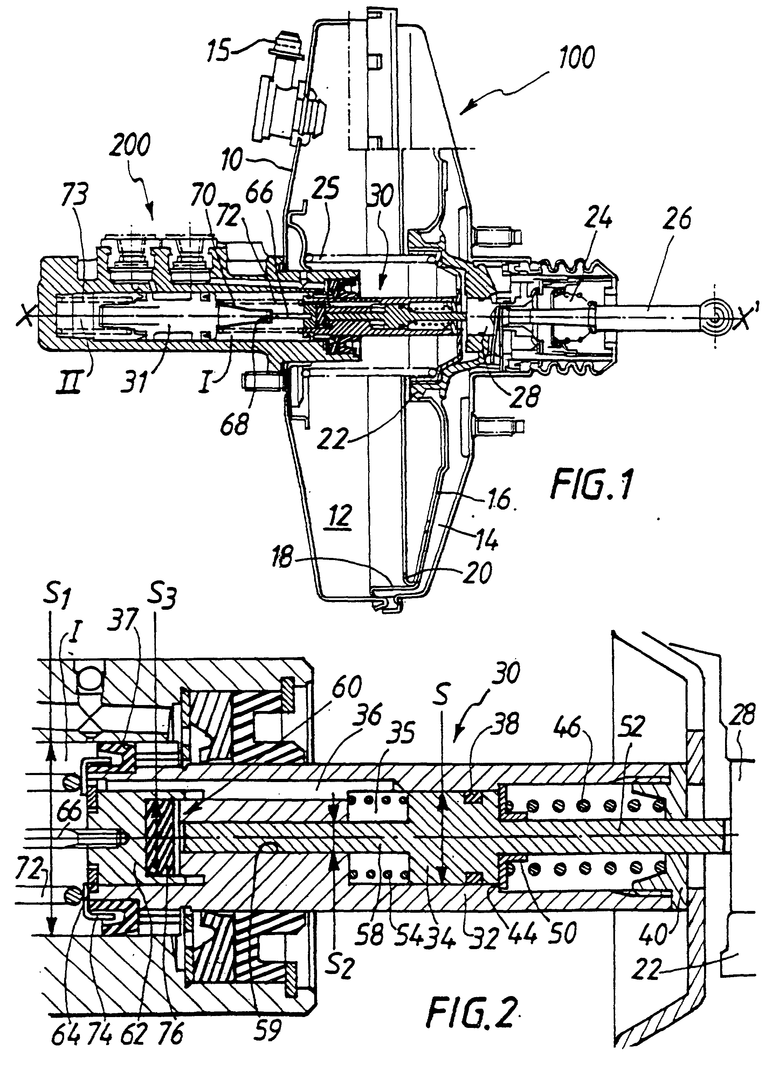

Comme on le voit mieux sur la Figure 2, le piston primaire 30 est en fait composite et comprend d'une part un cylindre 32 mobile et creux, et d'autre part un piston de réaction 34.

Le volume intérieur 35 du cylindre mobile creux 32 communique avec le volume intérieur I du circuit primaire du maître-cylindre par l'intermédiaire d'ouvertures, telles que 36, ménagées dans le cylindre mobile suivant une direction axiale.

En dehors du passage de fluide que permettent ces ouvertures 36 entre le volume intérieur I du circuit primaire du maître-cylindre 200 et le volume intérieur 35 du cylindre mobile 32, ce cylindre mobile 32 coulisse de façon étanche dans le corps du maître-cylindre 200, l'étanchéité étant obtenue grâce au moins à un joint annulaire à lèvre 37.

Le piston de réaction 34, quant à lui, coulisse à l'intérieur du cylindre mobile 32, qu'il obture de façon étanche grâce à un joint annulaire 38.

Le cylindre mobile 32 est relié, par l'intermédiaire d'une bague 40, à la jupe rigide 20 de manière à recevoir une partie au moins de la force d'assistance exercée par cette jupe rigide 20.

Le piston de réaction 34 est disposé axialement, en regard du plongeur 28, susceptible de lui transmettre au moins la force d'entrée exercée sur la tige de commande 26 elle-même solidaire du plongeur 28.

On va maintenant exposer le fonctionnement du dispositif décrit jusqu'à présent.

Au repos, les différentes pièces mobiles occupent la position représentée sur les Figures 1 et 2, et en particulier le piston de réaction 34 est en butée vers l'avant sur un épaulement radial 44 du cylindre mobile 32 sous l'effet de la sollicitation d'un ressort 46. Le clapet 24 autorise la communication entre les deux chambres 12 et 14, qui sont alors à la même pression réduite fournie par le raccord 15.

Un premier effort sur la pédale de frein sert à dépasser la précontrainte du ressort de la tige de commande 26 et à amener le clapet 24 dans une position où il isole les deux chambres 12 et 14 l'une de l'autre. Cette augmentation de l'effort sur la pédale de frein ne fournit donc aucune augmentation de pression dans le maître-cylindre.

Après cette course prédéterminée de la tige de commande 26, le clapet 24 ouvre à l'atmosphère la chambre arrière 14 du servomoteur 100, et une différence de pressions s'établit entre les deux chambres 12 et 14 du servomoteur. Cette différence de pressions engendre une force d'assistance qui fait avancer la jupe rigide 20 et le cylindre mobile 32.

La pression hydraulique dans le circuit primaire I du maître-cylindre 200 s'élève alors et s'établit, par circulation de fluide hydraulique à travers les ouvertures 36, dans le volume interne 35 du cylindre mobile 32, et s'exerce sur la section S du piston de réaction 34.

Dans un premier temps, la force engendrée par cette pression s'exerçant sur cette section S ne dépasse pas la précontrainte au repos du ressort 46, de sorte que le piston de réaction 34 reste immobile par rapport au cylindre mobile 32, et à distance de la tige de poussée 42, aucune réaction n'étant alors ressentie sur la pédale de frein.

Puis, la pression hydraulique augmente dans les volumes I et 35, et atteint une valeur prédéterminée, pour laquelle, s'appliquant sur la section S, elle devient suffisante pour vaincre la précontrainte au repos du ressort 46. Le piston de réaction 34 se déplace alors vers l'arrière et vient au contact du plongeur 28. On pourra avantageusement prévoir une pièce de butée en caoutchouc ou un autre matériau élastomère à l'arrière du piston de réaction 34, et/ou à l'avant du plongeur 28 pour amortir le choc de ce contact et le bruit en résultant.

Cette première phase de fonctionnement est appelée le « saut » du servomoteur.

Le saut du servomoteur peut être réglé à toute valeur désirée en ajustant la précontrainte au repos du ressort 46. On peut prévoir par exemple, comme on l'a représenté sur les Figures 1 et 2, que la bague 40 soit filetée et vissée dans le cylindre mobile 32 auquel elle transmet une partie au moins de la force d'assistance s'exerçant sur la jupe 20 en appui contre elle.

Le vissage de la bague 40 dans le cylindre mobile 32 a ainsi pour effet de comprimer le ressort 46, donc d'augmenter la précontrainte qu'exerce ce dernier sur le piston de réaction 34 en direction du maître-cylindre, c'est-à-dire encore d'augmenter la valeur du saut.

Pour compenser la réduction de longueur résultant du vissage de la bague 40 dans le cylindre mobile 32, cette bague est par exemple réalisée en deux parties vissées l'une dans l'autre de manière à présenter une longueur totale réglable.

On peut également prévoir de réaliser une autre pièce en deux parties vissées l'une dans l'autre de manière à présenter une longueur totale réglable, le réglage de cette longueur pouvant éventuellement permettre notamment de modifier l'ouverture du clapet à l'apparition du saut, quelle que soit la valeur donnée à ce dernier par vissage de la bague 40 dans le cylindre mobile 32.

Après ce phénomène de saut, le piston de réaction 34 exerce sur le plongeur 28, et donc sur la pédale de frein, une force de réaction, dépendant de la force d'assistance, s'opposant à la force d'entrée, et permettant donc le contrôle de la première force par la seconde. Le piston de réaction 34 est alors soumis à la pression hydraulique régnant dans la chambre de réaction constituée par le volume intérieur 35 du cylindre mobile 32.

Le rapport d'assistance du dispositif de freinage est égal au rapport de la section S₁ du cylindre mobile 32 sur la section S du piston de réaction 34.

La force d'assistance atteint son maximum lorsque la pression dans la chambre arrière du servomoteur atteint la pression atmosphérique, et ne peut donc plus augmenter. On atteint alors le phénomène connu sous le nom de saturation.

Dans toutes ces phases de fonctionnement, on voit que la pression hydraulique ainsi engendrée dans le circuit primaire I s'exerce sur le piston secondaire 31, qui à son tour engendre une élévation de pression hydraulique dans le circuit secondaire.

Si une défaillance survient dans ce dernier circuit, alors le piston secondaire 31 ne peut plus le pressuriser et va en butée au fond du maître-cylindre, le piston primaire 30 continuant d'engendrer une élévation de pression dans le circuit primaire ainsi qu'on l'a expliqué plus haut, au prix d'un allongement de la course de la tige de commande 26 et de la pédale de freinage. Naturellement, une alarme sonore et/ou visuelle au tableau de bord aura signalé au conducteur la défaillance du circuit de freinage, de sorte qu'il ne sera pas trop surpris par cette course allongée.

Par contre, si une défaillance survient dans le circuit primaire, le piston primaire vient en butée contre le piston secondaire qui engendre alors une augmentation de pression dans le circuit secondaire, avec un allongement correspondant de la course de la tige de commande 26 et de la pédale de frein. Dans cette dernière hypothèse, la pression dans le circuit primaire ne pouvant s'élever, le piston de réaction 34 n'exerce aucune force sur le plongeur 28, de sorte que le conducteur ne ressent aucun effort résistant sur la pédale de frein dont la course est allongée, et qu'il éprouve de grandes difficultés à doser son action de freinage dans ces conditions.

La présente invention permet d'atteindre ce résultat, c'est à dire obtenir un freinage en cas de défaillance du circuit primaire, en fournissant au conducteur une réaction lui permettant un contrôle optimal du freinage dans ces conditions dégradées.

Conformément à la présente invention, et comme on le voit mieux sur la Figure 2, le piston de réaction 34 est lui-même composite. Il compolte une première partie 50, en butée, en position de repos, sur le cylindre mobile 32 sous l'effet de la sollicitation du ressort 46. Il comporte également une deuxième partie 52, susceptible de coulisser à l'intérieur de la première partie 50.

La deuxième partie 52 est en butée vers l'arrière, en position de repos, sur la première partie 50 sous l'effet de la sollicitation d'un deuxième ressort 54 disposé entre des épaulements du cylindre mobile 32 et de cette deuxième partie 52 Le deuxième ressort 54 a une précontrainte au repos inférieur à celle du ressort 46.

La deuxième partie 52 coulisse de façon étanche dans le cylindre mobile 32 grâce au joint annulaire 38, comme on l'a décrit plus haut. La deuxième partie 52 est formée à son extrémité avant avec un prolongement axial 58, coulissant avec jeu dans un alésage axial 59 du cylindre mobile 32, et de section transversale S₂. On pourra par exemple prévoir de former le prolongement axial 58 et / ou l'alésage (59) avec des gorges ou des rainures axiales, permettant une communication sans restriction entre le logement 60 et la chambre de réaction 35.

L'extrémité avant du cylindre mobile 32 est formée avec un logement 60 dans lequel est maintenue prisonnière axialement une pièce intermédiaire 62, par exemple à l'aide d'un circlips 64. La pièce intermédiaire 62 est solidaire, par exemple par vissage, d'une tige 66 s'étendant vers l'avant, l'extrémité avant de la tige 66 étant formée avec une tête 68 (Figure 1) retenue prisonnière d'une coupelle 70 maintenue écartée du piston primaire par un ressort de compression 72.

La tige 66 et la coupelle 70 déterminent ainsi la longueur maximale du ressort 72, et également l'écartement maximal entre les pistons primaire 30 et secondaire 31, un ressort 73 étant disposé entre le fond du maître-cylindre et le piston secondaire 31 pour solliciter ce dernier en appui sur la coupelle 70, le tarage du ressort 72 étant supérieur à celui du ressort 73

L'effet du ressort 72 est également de solliciter la pièce intermédiaire 62 vers l'avant, en butée contre le circlips 64. On pourra avantageusement prévoir, comme on l'a représenté, que le circlips 64 soit maintenu en place par le ressort 72 lui-même, ou par l'intermédiaire d'une rondelle 74 participant également au maintien du joint 37.

La pièce intermédiaire 62 est formée sur sa face arrière avec un logement axial cylindrique dans lequel est disposé un disque 76 en caoutchouc ou autre matériau élastomère, de section transversale S₃.

Le fonctionnement du dispositif de freinage assisté selon l'invention se comprend aisément d'après les explications qui précèdent. Lors d'un freinage dans des conditions normales, c'est à dire hors défaillance, la pression régnant dans le volume intérieur I du circuit primaire du maître-cylindre est communiquée à la chambre de réaction 35 par l'ouverture 36 pour s'exercer sur la section S de la deuxième partie 52 du piston de réaction, et la faire reculer en même temps que la première partie 50, procurant ainsi la réaction voulue sur le plongeur 28 et donc sur la tige de commande 26 et la pédale de frein.

Si une défaillance survient dans le circuit secondaire II, alors le piston secondaire 31 ne peut plus pressuriser ce circuit II et va en butée au fond du maître-cylindre. Le piston primaire 30 continue d'engendrer une élévation de pression dans le circuit primaire I, la pression présente dans ce circuit agissant sur la section S du piston de réaction ainsi qu'on l'a expliqué plus haut. On obtient donc bien un freinage avec le seul circuit primaire 1, la course de la tige de commande 26 et de la pédale de freinage étant allongée de la course nécessaire au piston secondaire pour aller en butée sur le fond du maître-cylindre, ce freinage étant effectué par le conducteur à l'encontre d'une force de réaction proportionnelle à l'intensité du freinage.

Si le circuit primaire 1 est en défaillance, aucune élévation de pression ne peut s'y produire lors d'une action de freinage. Lorsque le conducteur appuie sur la pédale de frein, le plongeur 28 actionne le clapet 24 qui met la chambre arrière 14 du servomoteur en communication avec l'atmosphère. La cloison mobile 16, soumise à une différence de pressions, avance donc en direction du maître-cylindre, entraînant avec elle le cylindre mobile 32.

Ce dernier pénètre dans le maître-cylindre sans rencontrer de résistance puisque la pression dans le circuit primaire I ne peut s'élever. Le phénomène de saut expliqué plus haut ne peut donc se produire, de sorte que le plongeur 28 ne rencontre lui non plus aucune résistance, et avance à son tour par rapport au piston pneumatique 22. Dans ce mouvement, le plongeur 28 vient en butée sur la deuxième partie 52 du piston de réaction, qu'il fait coulisser vers l'avant par rapport à la première partie 50, jusqu'à ce que le prolongement axial 58 vienne à son tour en butée contre le disque 76, à l'encontre de l'action du ressort 54.

Simultanément, dans le mouvement vers l'avant du piston primaire 30, la tige 66 pénètre dans la coupelle 70 du piston secondaire 31, le circuit secondaire, exempt de défaillance par hypothèse, opposant une résistance à l'avancement de ce piston secondaire.

Le mouvement vers l'avant du piston primaire 30 se poursuit jusqu'à ce que la tige 66 ait complètement pénétré dans la coupelle 70, c'est à dire jusqu'à ce que la face avant de la partie intermédiaire 62 vienne en contact de l'extrémité arrière de la coupelle 70. A ce moment, d'une part le piston secondaire 31 est sollicité vers l'avant et engendre une augmentation de pression dans le circuit secondaire Il, et d'autre part, l'extrémité arrière de la coupelle 70, en butée contre la pièce intermédiaire 62, fait reculer celle-ci dans son logement 60 jusqu'à ce que la face arrière du disque 76 vienne au contact de la face avant du logement 60, ou plus exactement de la partie annulaire de cette face avant autour de l'alésage axial 59, en faisant reculer le prolongement axial 58, et donc le piston de réaction.

On se retrouve alors dans une situation analogue à celle d'un servomoteur à réaction mécanique fournie par un disque de réaction. En etlèt, l'effort d'entrée exercé sur la tige de commande 26 est transmis par le plongeur 28 sur la deuxième partie 52 du piston de réaction, et est exercé par le prolongement axial 58 sur la section Si du disque 76. L'effort d'assistance exercé par la cloison mobile est transmis par le cylindre mobile 32 sur la section annulaire S₃ - S₂ du disque 76. Le disque 76 est pour sa part soumis à la force engendrée par la pression régnant dans le circuit secondaire II, s'exerçant sur la piston secondaire 31 et transmise par la coupelle 70.

Dans ces conditions de défaillance du circuit primaire I, on voit donc bien que le conducteur obtient un freinage avec le seul circuit secondaire II, la course de la tige de commande 26 et de la pédale de freinage étant allongée de la course nécessaire au piston primaire pour aller en butée sur la coupelle 70 du piston secondaire 31, ce freinage étant effectué par le conducteur à l'encontre d'une force de réaction proportionnelle à la pression régnant dans le circuit secondaire II, avec un rapport d'assistance égal au rapport de la section annulaire S₃ du cylindre mobile 32 sur la section S₂ du piston de réaction en butée contre le plongeur 28.

On pourra librement choisir ce deuxième rapport d'assistance et lui donner toute valeur désirée, inférieure, égale ou supérieure au rapport d'assistance obtenu hors défaillance. On choisira de préférence le deuxième rapport d'assistance supérieur au rapport d'assistance obtenu hors défaillance, pour assister d'avantage le conducteur dans cette situation de défaillance, où il ne bénéficie du freinage que sur le seul circuit hydraulique secondaire, et donc en général sur deux roues au lieu de quatre, et qu'il ait ainsi la même sensation lorsqu'il appuie sur la pédale de frein, à la perte de course près, et en n'utilisant que le circuit secondaire.

On a donc bien réalisé, selon la présente invention, un dispositif de freinage assisté à réaction hydraulique, qui présente des caractéristiques de fonctionnement améliorées en cas de défaillance du circuit hydraulique primaire, puisque, mise à part la course de pédale allongée, le conducteur peut alors doser son effort de freinage comme il a l'habitude de la faire pour des freinages hors défaillance. Les moyens utilisés pour obtenir ce résultat sont relativement simples, et sont donc de coût réduit et de fonctionnement fiable en toutes circonstances, aussi bien dans des conditions normales de fonctionnement que dans des conditions de défaillance hydraulique, l'étanchéité entre les circuits primaire et secondaire étant conforme à la réglementation.

## Revendications

1. Dispositif de freinage assisté pour véhicule à moteur, comprenant d'une part un maître-cylindre (200) rempli d'un fluide de freinage et équipé d'un piston primaire (30) destiné à recevoir une force d'actionnement se composant d'une force d'entrée et d'une force d'assistance agissant toutes deux suivant une direction axiale, pour engendrer une augmentation de pression dans un circuit hydraulique primaire (I), et d'un piston hydraulique secondaire (31) soumis à la pression hydraulique dans le circuit hydraulique primaire (I) et engendrant une augmentation de pression dans un circuit hydraulique secondaire (II), et d'autre part un servomoteur pneumatique d'assistance (100) susceptible d'être commandé par application de la force d'entrée sur une tige de commande (26) solidaire d'un plongeur (28) contrôlant l'ouverture d'un clapet à trois voies (24), pour exercer la force d'actionnement sur le piston primaire (30), le servomoteur comportant une enveloppe rigide (10) séparée de façon étanche en au moins deux chambres (12, 14) au moyen d'au moins une cloison mobile (16), susceptible d'être sollicitée par une différence de pression entre les deux chambres (12, 14) résultant de l'ouverture du clapet à trois voies (24) et d'entraîner un piston pneumatique (22), mobile par rapport à l'enveloppe (10), portant le clapet à trois voies (24) et contribuant au moins à transmettre la force d'assistance, le piston primaire (30) du maître cylindre (200) comportant lui-même un cylindre mobile (32), creux, communiquant avec le circuit hydraulique primaire (I) du maître-cylindre, recevant une partie au moins de la force d'assistance, et à l'intérieur duquel coulisse, de façon étanche et suivant la direction axiale, un piston de réaction (34) susceptible de recevoir au moins la force d'entrée, des premiers moyens élastiques (46) exerçant une première force élastique entre le piston de réaction (34) et le cylindre mobile (32) et sollicitant le piston de réaction (34) en direction du maître-cylindre (200), au moins une ouverture (36) étant pratiquée dans le cylindre mobile (32) pour faire communiquer l'intérieur (35) de ce dernier avec le circuit hydraulique primaire (I), **caractérisé en ce que** le cylindre mobile (32) comporte une pièce de réaction (76) sur laquelle est susceptible de venir en butée une partie d'extrémité (58) du piston de réaction (34) pour recevoir de cette pièce de réaction une force proportionnelle à la force engendrée par la pression hydraulique du circuit hydraulique secondaire (II) s'exerçant sur le piston secondaire (31) lors d'une défaillance du circuit hydraulique primaire (I), la force engendrée par la pression hydraulique lors d'une défaillance du circuit hydraulique primaire étant mécaniquement transmise à la pièce de réaction par le piston secondaire.

2. Dispositif de freinage assisté selon la revendication 1, **caractérisé en ce que** le piston de réaction (34) est composite, et comporte une première partie (50) en butée, en position de repos, contre le cylindre mobile (32) sous l'effet des premiers moyens élastiques (46), et une deuxième partie (52) susceptible de coulisser par rapport à la première partie (50), des deuxièmes moyens élastiques (54) exerçant vers l'arrière une deuxième force élastique sur la deuxième partie (52) pour la solliciter en butée, en position de repos, contre la première partie (50).

3. Dispositif de freinage assisté selon la revendication 2, **caractérisé en ce que** la pièce de réaction (76) est portée par une pièce intermédiaire (62) du cylindre mobile (32).

4. Dispositif de freinage assisté selon la revendication 3, **caractérisé en ce que** la pièce intermédiaire (62) est retenue dans un logement (60) du cylindre mobile (32) et mobile axialement dans ce logement (60).

5. Dispositif de freinage assisté selon la revendication 4, **caractérisé en ce que** la pièce intermédiaire (62) est susceptible de venir en butée par rapport au piston secondaire (31) et de reculer dans son logement (60) lors d'une défaillance du circuit hydraulique primaire (I).

6. Dispositif de freinage assisté selon la revendication 1, **caractérisé en ce que** la partie d'extrémité (58) du piston de réaction (34) coulisse de façon non étanche dans un alésage (59) du cylindre mobile (32).

7. Dispositif de freinage assisté selon la revendication 6, **caractérisé en ce que** la partie d'extrémité (58) du piston de réaction (34) est formée avec des gorges axiales.

8. Dispositif de freinage assisté selon la revendication 6, **caractérisé en ce que** l'alésage (59) du cylindre mobile (32) est formé avec des gorges axiales.

9. Dispositif de freinage assisté selon l'une des revendications 6 à 8, **caractérisé en ce que** l'alésage (59) du cylindre mobile (32) s'étend entre le logement (60) de la pièce de réaction (76) et l'intérieur (35) du cylindre mobile (32).

10. Dispositif de freinage assisté selon l'une quelconque des revendications précédentes, **caractérisé en ce que** la piècede réaction (76) est un disque de réaction (76).

## Patentansprüche

1. Bremskraftverstärker für Motorfahrzeuge, der einerseits einen Hauptzylinder (200) aufweist, der mit einer Bremsflüssigkeit gefüllt und mit einem ersten Bremskolben (30) ausgestattet ist, der dazu dient, eine Betätigungskraft aufzunehmen, die sich aus einer Eingangskraft und einer Hilfskraft zusammensetzt, wobei beide entlang einer axialen Richtung wirken, um eine Druckerhöhung in einem ersten Hydraulikkreis (I) zu erzeugen, und mit einem zweiten hydraulischen Kolben (31) ausgestattet ist, der dem hydraulischen Druck in dem ersten Hydraulikkreis (I) ausgesetzt ist und eine Druckerhöhung in einem zweiten Hydraulikkreis (II) erzeugt, und der andererseits einen pneumatischen Bremskraftverstärker (100) aufweist, der durch die auf einen Steuerkolben (26) wirkende Eingangskraft betätigt werden kann, wobei der Steuerkolben (26) mit einem Tauchkolben (28) fest verbunden ist, der die Öffnung eines Dreiwege-Ventils (24) steuert, um die Betätigungskraft auf den ersten Kolben (30) auszuüben, wobei der Bremskraftverstärker ein starres Gehäuse (10) aufweist, das in dichter Weise in wenigstens zwei Kammern (12, 14) mit Hilfe von wenigstens einer beweglichen Trennwand (16) geteilt ist, die durch das Öffnen des Dreiwege-Ventils (24) mit einem Druckunterschied zwischen den beiden Kammern (12, 14) beaufschlagt werden und einen pneumatische Kolben (22) mitnehmen kann, der bezüglich des Gehäuses (10) beweglich ist, das das Dreiwege-Ventil (24) trägt und wenigstens zur Übertragung der Hilfskraft beiträgt, wobei der erste Kolben (30) des Hauptzylinders (200) selbst einen beweglichen Hohlzylinder (32) umfaßt, der mit dem ersten Hydraulikkreis (I) des Hauptzylinders verbunden ist, wenigstens einen Teil der Hilfskraft aufnimmt und in dessen Inneren auf dichte Weise und entlang einer axialen Richtung ein Reaktionskolben (34) gleitet, der wenigstens die Eingangskraft aufnehmen kann, wobei erste elastische Mittel (46) eine erste elastische Kraft zwischen dem Reaktionskolben (34) und dem beweglichen Zylinder (32) ausüben und den Reaktionskolben (34) in Richtung des Hauptzylinders (200) beaufschlagen, wobei wenigstens eine Öffnung (36) in dem beweglichen Zylinder (32) ausgebildet ist, um dessen Innenraum (35) mit dem ersten Hydraulikkreis (I) zu verbinden, **dadurch gekennzeichnet, daß** der bewegliche Zylinder (32) ein Reaktionsteil (76) aufweist, auf dem sich ein Endteil (58) des Reaktionskolbens (34) abstützen kann, um von diesem Reaktionsteil eine Kraft aufzunehmen, die proportional ist zu der Kraft, die von dem hydraulischen Druck des zweiten Hydraulikkreises (II) erzeugt und bei einem Ausfall des ersten Hydraulikkreises (I) auf den zweiten Kolben (31) ausgeübt wird, wobei die Kraft, die bei einem Ausfall des ersten Hydraulikkreises durch den hydraulischen Druck erzeugt wird, über den zweiten Kolben mechanisch auf das Reaktionsteil übertragen wird.

2. Bremskraftverstärker nach Anspruch 1, **dadurch gekennzeichnet, daß** der Reaktionskolben (34) zusammengesetzt ist und ein erstes Teil (50) aufweist, das sich in Ruhestellung unter der Wirkung der ersten elastischen Mittel (46) gegen den beweglichen Zylinder (32) abstützt, sowie ein zweites Teil (52), das bezüglich des ersten Teils (50) gleiten kann, wobei zweite elastische Mittel (54) nach hinten eine zweite elastische Kraft auf das zweite Teil (52) ausüben, um es in der Ruhestellung gegen das erste Teil (50) zu beaufschlagen.

3. Bremskraftverstärker nach Anspruch 2, **dadurch gekennzeichnet, daß** das Reaktionsteil (76) durch ein Zwischenteil (62) des beweglichen Zylinders (32) getragen wird.

4. Bremskraftverstärker nach Anspruch 3, **dadurch gekennzeichnet, daß** das Zwischenteil (62) in einer Aufnahme (60) des beweglichen Zylinders (32) gehalten wird und in dieser Aufnahme (60) axial beweglich ist.

5. Bremskraftverstärker nach Anspruch 4, **dadurch gekennzeichnet, daß** sich das Zwischenteil (62) an dem zweiten Kolben (31) abstützen und bei einem Ausfall des ersten Hydraulikkreises (I) in seiner Aufnahme (60) zurückweichen kann.

6. Bremskraftverstärker nach Anspruch 1, **dadurch gekennzeichnet, daß** das Endteil (58) des Reaktionskolbens (34) in nicht-dichter Weise in einer Bohrung (59) des beweglichen Zylinders (32) gleitet.

7. Bremskraftverstärker nach Anspruch 6, **dadurch gekennzeichnet, daß** das Endteil (58) des Reaktionskolbens (34) mit axialen Rillen ausgebildet ist.

8. Bremskraftverstärker nach Anspruch 6, **dadurch gekennzeichnet, daß** die Bohrung (59) des beweglichen Zylinders (32) mit axialen Rillen ausgebildet ist.

9. Bremskraftverstärker nach einem der Ansprüche 6 bis 8, **dadurch gekennzeichnet, daß** sich die Bohrung (59) des beweglichen Zylinders (32) zwischen der Aufnahme (60) des Reaktionsteils (76) und dem Innenraum (35) des beweglichen Zylinders (32) erstreckt.

10. Bremskraftverstärker nach einem der vorstehenden Ansprüche, **dadurch gekennzeichnet, daß** das Reaktionsteil (76) eine Reaktionsscheibe (76) ist.

## Claims

1. Boosted braking device for a motor vehicle, comprising on the one hand a master cylinder (200) full of brake fluid and equipped with a primary piston (30) intended to receive an actuating force composed of an input force and of a boost force both acting in an axial direction, so as to cause an increase in pressure in a primary hydraulic circuit (I), and with a secondary hydraulic piston (31) subjected to the hydraulic pressure in the primary hydraulic circuit (I) and causing an increase in pressure in a secondary hydraulic circuit (II), and on the other hand a pneumatic booster (100) which can be controlled by the application of the input force to a control rod (26) integral with a plunger (28) controlling the opening of a three-way valve (24) in order to exert the actuating force on the primary piston (30), the booster including a rigid casing (10). divided in leaktight fashion into at least two chambers (12, 14) by means of at least one moving partition (16) which can be acted upon by a difference in pressure between the two chambers (12, 14) resulting from the opening of the three-way valve (24) and can drive a pneumatic piston (22), which can move with respect to the casing (10), carrying the three-way valve (24) and contributing at least to transmitting the boost force, the primary piston (30) of the master cylinder (200) itself including a hollow moving cylinder (32) communicating with the primary hydraulic circuit (I) of the master cylinder, receiving at least some of the boost force, and inside which there slides, in leaktight fashion and in the axial direction, a reaction piston (34) which can receive at least the input force, first elastic means (46) exerting a first elastic force between the reaction piston (34) and the moving cylinder (32) and urging the reaction piston (34) towards the master cylinder (200), at least one opening (36) being made in the moving cylinder (32) to make the inside (35) of the latter communicate with the primary hydraulic circuit (I), **characterized in that** the moving cylinder (32) includes a reaction piece (76) against which an end part (58) of the reaction piston (34) can abut in order to recieve from this reaction piece a force proportional to the force caused by the hydraulic pressure in the secondary hydraulic circuit (II) exerted on the secondary piston (31) in the event of failure of the primary hydraulic circuit (I), the force caused by the hydraulic pressure in the event of failure of the primary hydraulic circuit being transmitted mechanically to the reaction piece by the secondary piston.

2. Boosted braking device according to Claim 1, **characterized in that** the reaction piston (34) is composite and includes a first part (50) in abutment, in the position of rest, against the moving cylinder (32) under the effect of the first elastic means (46), and a second part (52) which can slide with respect to the first part (50), second elastic means (54) exerting backwards a second elastic force on the second part (52) in order to urge it into abutment, in the position of rest, against the first part (50).

3. Boosted braking device according to Claim 2, **characterized in that** the reaction piece (76) is carried by an intermediate piece (62) of the moving cylinder (32).

4. Boosted braking device according to Claim 3, **characterized in that** the intermediate piece (62) is held in a housing (60) of the moving cylinder (32) and can move axially in this housing (60).

5. Boosted braking device according to Claim 4, **characterized in that** the intermediate piece (62) can come into abutment with respect to the secondary piston (31) and can retreat into its housing (60) in the event of failure of the primary hydraulic circuit (I).

6. Boosted braking device according to Claim 1, **characterized in that** the end part (58) of the reaction piston (34) slides in a non-leaktight fashion in a bore (59) of the moving cylinder (32).

7. Boosted braking device according to Claim 6, **characterized in that** the end part (58) of the reaction piston (34) is formed with axial grooves.

8. Boosted braking device according to Claim 6, **characterized in that** the bore (59) of the moving cylinder (32) is formed with axial grooves.

9. Boosted braking device according to one of Claims 6 to 8, **characterized in that** the bore (59) of the moving cylinder (32) extends between the housing (60) of the reaction piece (76) and the inside (35) of the moving cylinder (32).

10. Boosted braking device according to any one of the preceding claims, **characterized in that** the reaction piece (76) is a reaction disc (76).
